# EUROPEAN PATENT APPLICATION

(11) **EP 3 960 718 A1**
(43) Date of publication of application: **02.03.2022**
(21) Application number: 20192306.7
(22) Date of filing: 24.08.2020
(51) Int. Cl.: C04B 26/14

(54) **MORTAR SYSTEM**

(71) Applicant: Hilti Aktiengesellschaft, 9494 Schaan (LI)
(72) Inventor: Martin-Lasanta, Ana-Maria, 86899 Landsberg am Lech (DE); Behrens, Nicole, 81245 München (DE)
(74) Representative: Hilti Aktiengesellschaft Corporate Intellectual Property

(57) **Abstract**

Subject of the invention is a mortar system, comprising:
a component (A) comprising
(i) a first epoxide bearing three or more epoxy groups, typically more than three epoxy groups, and
(ii) a second epoxide bearing two epoxy groups or more than two epoxy groups, wherein the second epoxide is different from the first epoxide and comprises a linear, aliphatic or cyclic group,
and

a component (B) comprising a hardener bearing at least one functional group capable of reacting with an epoxy group.

## Description

The invention relates to a mortar system, to a process for preparing a mortar from such a system, and to a use of such a system for chemical anchoring.

### State of the art

Mortar systems are generally used in the field of construction. Such mortar systems often comprise epoxy resin mixtures. Such epoxy resin mixtures are regularly cured with hardeners (curing agents) to form highly crosslinked thermosetting polymers. These polymers are the binders of so-called chemical anchoring mortars, which are sometimes also termed adhesive bonded anchors.

It is known that temperature affects the performance of chemical anchoring mortars, as for example described in Cook, R. A., Konz, R. C., "Factors Influencing Bond Strength of Adhesive Anchors", ACI Structural Journal, 2001, 98, 76-86, and *"*Mechanical behaviour of adhesive anchors under high temperature exposure: experimental investigation", International Journal of Adhesion and Adhesives, 2017, 78, 200-211. It is known that when the temperature reaches the so-called glass transition temperature T_{g}, not only epoxy components, but also amorphous materials and semi-crystalline materials with amorphous regions, hence, the polymeric part of the mortar, also called binder, start transforming from an infusible solid to a rubbery solid, thereby losing anchoring ability. As a result, the mechanical properties including the pull-out properties of the mortar worsen. Therefore, mortars with higher T_{g} are desired for chemical anchoring applications.

Further, some of the components of epoxy resin mixtures typically used in mortar systems are petroleum-based (or fuel-based) components. Petrochemical feedstock accounts for as much as 12% of the global oil demand, see for example https://www.iea.org/reports/the-future-of-petrochemicals. The reduction of petrochemical consumption is generally desired to achieve a sustainable global society. Some approaches have already been made to use feedstocks from renewable sources as bio-based raw materials to formulate chemical anchors, for example as described in WO 2015/018466 A1, or are known from WO 2014/161638 A1 which includes biogenic liquid non-reactive diluents. In the context of epoxy thermosetting polymers, bio-based compounds like vanillin, itaconic acid, cardanol, furan derivatives, sugars and fatty acids have been studied, see e.g. Guzmán, D., Santiago, D., Serra, A., Ferrando, F. "Novel Bio-Based Epoxy Thermosets Based on Triglycidyl Phloroglucinol Prepared by Thiol-Epoxy Reaction", Polymers, 2020, 12 (337): doi:10.3390/polym12020337. Mortars containing bio-based components are generally desirable also for chemical anchoring applications.

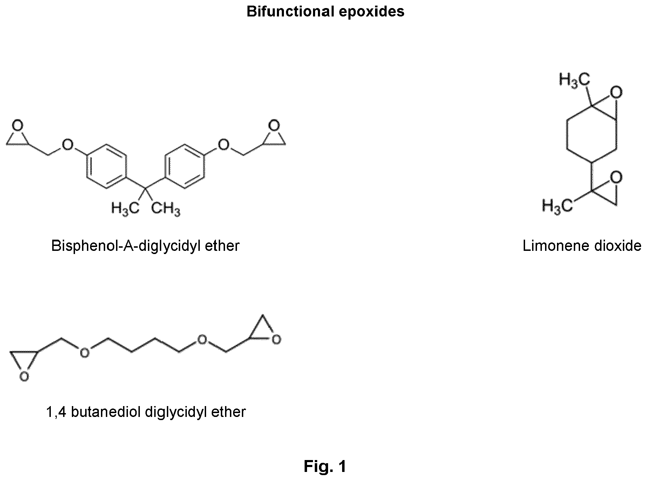

Moreover, constituents of common epoxy resin mixtures often include bisphenol-A-diglycidylether (DGEBA), see also Fig. 1. However, DGEBA is derived from bisphenol-A (BPA) and therefore often unreacted BPA ends up in the products derived. BPA itself is classified as an endocrine disruption compound (EDC) due to its estrogenic characteristics, see e.g. Husain, Q., Qayyum, S. "Biological and enzymatic treatment of bisphenol a and other endocrine disrupting compounds: a review' Crit. Rev. Biotechnol., 2013, 33, 260-292. Therefore, the substitution of BPA derivates like DGEBA in chemical anchoring mortars is desired.

Overall, there is a general desire for improvement of mortar systems and mortars known in the art, in particular for use in chemical anchoring applications.

### Problem underlying the invention

It is an object of the present invention to provide a mortar system which overcomes drawbacks of the prior art at least partially and preferably entirely.

It is a further object of the present invention to provide a mortar system which leads to a mortar which can withstand elevated temperatures, in particular a mortar with higher T_{g}.

It is also an object of the present invention to provide a mortar system which contains less and preferably no estrogenic compounds and is thereby more health friendly.

It is furthermore an object of the present invention to provide a mortar system which is at least partially formed from bio-based components and is thereby more environmentally friendly.

It is another object of the present invention to provide a mortar, which mortar overcomes drawbacks of the prior art at least partially and preferably entirely.

It is another object of the present invention to provide a cured system, which cured system overcomes drawbacks of the prior art at least partially and preferably entirely.

It is another object of the present invention to provide a process for preparing a mortar from a mortar system, which process overcomes drawbacks of the prior art at least partially and preferably entirely.

It is another object of the present invention to provide a use of a mortar system for chemical anchoring, which use overcomes drawbacks of the prior art at least partially and preferably entirely.

### Disclosure of the invention

Surprisingly, it was found that the problem underlying the invention is solved by a mortar system according to the claims. Further embodiments of the invention are outlined throughout the description.

Subject of the invention is a mortar system, comprising:
a component (A) comprising
   (i) a first epoxide bearing three or more epoxy groups, preferably more than three epoxy groups, and
   (ii) a second epoxide bearing two epoxy groups or more than two epoxy groups, wherein the second epoxide comprises a linear, aliphatic or cyclic group and is different from the first epoxide,
      and
a component (B) comprising a hardener bearing at least one functional group capable of reacting with an epoxy group.

A mortar system is made from two or more components, usually from two components. It is therefore a multicomponent system, usually a bicomponent system. The components are typically provided separately, i.e. the components like component (A) and component (B) are not physically mixed. Such a mortar system typically comprises organic compounds like the first and the second epoxide, mineral filler(s) and optionally further additive(s). A mortar is made from such a mortar system by physically mixing the two or more components, wherein the two or more components are typically present in the mortar in a liquid or viscous state. A cured system, also referred to as compact, is made from such a mortar by hardening the mortar, wherein the two or more components are typically present in the cured system in a solid state. In the present invention, the organic compounds comprise epoxy compounds. Reference is therefore sometimes also made to an epoxy mortar system, an epoxy mortar, an epoxy cured system, an epoxy cured compact and compact, respectively.

The inventive mortar systems described above lead to a mortar upon hardening, i.e. upon reaction between component (A) and component (B). The component (A) is thus sometimes also referred to as "resin", and the component (B) is thus sometimes also referred to as "hardener". The resulting mortar can withstand elevated temperatures. The resulting mortar shows especially a higher T_{g} and hence shows an improved chemical anchoring performance. The resulting mortar can in particular exhibit improved pull-out properties at elevated temperatures when used in chemical anchoring applications. The resulting mortar can for example exhibit improved pull-out properties when used for chemically anchoring an element in concrete.

In particular, it was surprising that the use of an epoxide bearing an aliphatic cyclic group as the second epoxide in component (A) instead of typically used linear epoxides led to an equal or improved chemical anchoring performance, as demonstrated by e.g. higher glass transition temperatures and/or equal or improved pull-out properties. The second epoxide is sometimes also referred to as "reactive diluent". The reactive diluent bears two epoxy groups and therefore allows for a two-dimensional cross-linking within the inventive mortar system after mixing components (A) and (B). Without wishing to be bound to theory, it is believed that the aliphatic cyclic group within the second epoxide contributes to the improved chemical anchoring performance. As used in the art and herein, an aliphatic cyclic group is not an epoxy group. As used in the art and herein, an aliphatic cyclic group is not an aromatic group. It is preferred that the aliphatic cyclic group is a cyclobutyl, cyclopentyl, cyclohexyl, cycloheptyl or cyclooctyl group, more preferably a cyclopentyl or cyclohexyl group, and most preferably a cyclohexyl group. It is preferred that the aliphatic cyclic group bears one of the two epoxy groups of the second epoxide, while the second epoxy group of the second epoxide is a terminal epoxy group.

It was likewise surprising that the use of an epoxide, in particular an aromatic epoxide,bearing more than three epoxy groups as the first epoxide in component (A) instead of typically used bi-functional epoxides led to improved chemical anchoring performance, as again demonstrated by e.g. higher glass transition temperatures and/or increased pull-out properties. The definition of more than three epoxy groups is not limited to integers. Instead, there are compounds like e.g. phloroglucinol tris epoxy which bears, on average, 3.8 to 4 epoxy groups per molecule. An epoxide bearing more than three epoxy groups is thus an epoxide which bears on average more than three epoxy groups per molecule. An epoxide bearing more than three epoxy groups may thus be an epoxide which bears on average 3.1 or more epoxy groups per molecule. It is preferred that the first epoxide in component (A) is an epoxide which bears 3.8 or more epoxy groups, more preferably 3.8 to 4 epoxy groups, or exactly 4 epoxy groups. It is preferred that all epoxy groups of the first epoxide are terminal epoxy groups. It is more preferred that all epoxy groups of the first epoxide are glycidyl groups (2,3-epoxypropyl groups). The second epoxide in component (A) is an epoxide which bears 2 epoxy groups, i.e. exactly 2 epoxy groups.

When the inventive mortar system comprises a first epoxide bearing more than three epoxy groups, and furthermore comprises a different, second epoxide bearing at least two epoxy groups, which second epoxide comprises a linear, aliphatic or cyclic group, the effects as to an improved chemical anchoring performance can be particularly pronounced and can be higher than expected for the presence of the individual epoxides. In other words, the first epoxide being an epoxide bearing more than three epoxy groups and simultaneously the second epoxide being an epoxide bearing two epoxy groups and comprising an aliphatic cyclic group may lead to synergistic effects, in particular synergistically improved chemical anchoring performance. In a particularly preferred embodiment, the present invention therefore also provides a mortar system, comprising:
a component (A) comprising
   (i) a first epoxide bearing more than three epoxy groups, and
   (ii) a second epoxide bearing two epoxy groups, wherein the second epoxide comprises an aliphatic cyclic group and is different from the first epoxide, and
a component (B) comprising a hardener bearing at least one functional group capable of reacting with an epoxy group.

The content of estrogenic compounds in an inventive mortar system may be reduced. The inventive mortar system may actually be completely free of estrogenic compounds. It is preferred in this context that the inventive mortar system is free of any compound which is an EDC. It is particularly preferred that the inventive mortar system is free of any compound which is based on a bisphenol compound, in particular based on BPA. It is thus preferred that the inventive mortar system contains a reduced amount of DGEBA or most preferably is free of DGEBA.

The epoxides of component (A) may advantageously comprise bio-based components. The inventive mortar system may consequently be based on compounds from renewable sources, thereby enhancing sustainability. The inventive mortar system may contain such bio-based components, while still achieving the afore-mentioned desired thermal and mechanical performances, i.e. the desired chemical anchoring performance, when used in chemical anchoring applications.

In this context, it is particularly preferred that the second epoxide is limonene dioxide (LDO). The structure of limonene dioxide is shown in Fig. 1. Limonene dioxide is a difunctional reactive diluent, i.e. a difunctional epoxy resin component of very low viscosity. Limonene dioxide can be obtained from natural sources, so that the second epoxide is preferably bio-based limonene dioxide. The use of such bio-based limonene dioxide as the second epoxide can help making the inventive mortar system more environmentally friendly. Additionally, the use of limonene dioxide as the second epoxide may further enhance the chemical anchoring performance of a mortar made from the inventive mortar system.

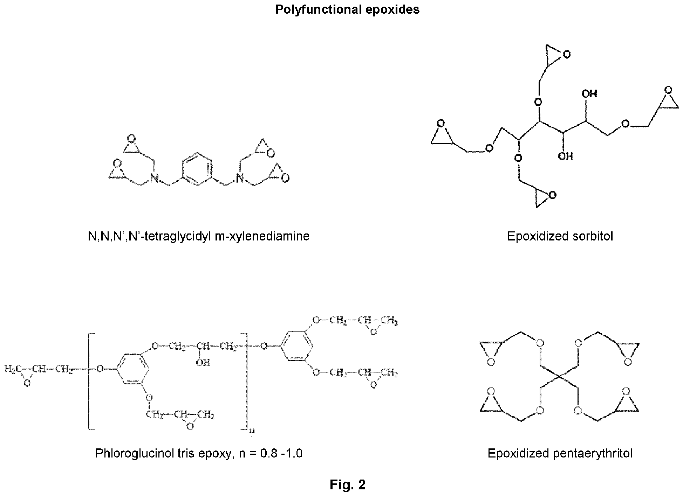

It is preferred that the first epoxide is an aromatic epoxide, and is more preferably selected from N,N,N',N'-tetraglycidyl meta-xylene diamine and phloroglucinol tris epoxy (the latter is sometimes also simply referred to as phloroglucinol). Their structures are shown in Fig. 2. The use of an aromatic epoxide, preferably a polyfunctional aromatic epoxide, as the first epoxide can strengthen the backbone of the resin component of the mortar system. The use of an aromatic epoxide, in particular a polyfunctional aromatic epoxide, as the first epoxide can therefore assist in increasing the mechanical strength of a resulting mortar, and hence the overall chemical anchoring performance. This effect can be in particular pronounced when N,N,N',N'-tetraglycidyl meta-xylene diamine or phloroglucinol tris epoxy is used as such an polyfunctional aromatic epoxide.

It is preferred that the first epoxide and/or the second epoxide are bio-based, wherein more preferably both the first epoxide and the second epoxide are bio-based. In this way, the mortar system can be made more environmentally friendly. A bio-based component, like a bio-based epoxide, can be differentiated from non-bio components, in particular fuel-based components, e.g. by means of radiocarbon dating (based on ¹⁴C), or by other isotope measurement techniques. Macroscopically, a bio-based component will typically contain trace amounts of other bio-based components because of its natural origin, i.e. a certain bio-fingerprint. Herein, a bio-based component, like a bio-based epoxide, preferably has a bio-based (or biogenic) carbon content according to ASTM D6866-20 (or ISO 16620-2:2019).

As a preferred example for the second epoxide, limonene dioxide can be mentioned. Its parent compound, limonene, is a racemic mixture of (+/-)-limonene. It is a natural cyclic monoterpene and a major component of oil extracted from citrus rind. It has chemo-preventive and antitumor activities. As a preferred example for the first epoxide, phloroglucinol can be mentioned. Phloroglucinol is a biobased phenol extracted from phlorotannins found in brown algae such as kelps and rockweeds or sargassacean species, see e.g. Jaillet, F., Nouailhas, H.; Boutevin, B., Caillol, S. "Synthesis of novel vinyl ester from biobased phloroglucinol", Green Materials 2016, 4 (2), 63-71. The synthesis of phloroglucinol tris epoxy has actually been described several times in the literature, see e.g. Negrell, C.; Cornille, A.; de Andrade Nascimento, P.; Robin, J.J.; Caillol, S. "New bio-based epoxy materials and foams from microalgal oil", Eur. J. Lipid Sci. Technol. 2017, 119, 1600214; and Noe, C.; Malburet, S.; Bouvet-Marchand, A.; Graillot, A.; Loubat, C.; Sangermano, M. "Cationic photopolymerization of bio-renewable epoxidized monomers", Prog. Org. Coat. 2019, 133, 131-138. It is therefore in particular preferred that the first epoxide is bio-based phloroglucinol and/or that the second epoxide is bio-based limonene dioxide, and it is more preferred that the first epoxide is bio-based phloroglucinol and that the second epoxide is bio-based limonene dioxide.

In one embodiment, it is preferred that the inventive mortar system has been hardened by a reaction between component (A) and component (B), like in a cured system. In such an embodiment, it is further preferred that the hardened mortar system (cured system or compact) has a glass transition temperature Tg2 of at least 80°C, more preferably of at least 90°C, particularly preferred of at least 100°C and even more preferred of at least 110°C. According to the present invention, the glass transition temperature Tg2 is measured by Differential Scanning Calorimetry (DSC). More specifically, the glass transition temperature Tg2 is measured as detailed herein in the section "Materials and methods". A respective glass transition temperature Tg2 indicates that the hardened mortar system is less prone to form rubbery solids at elevated temperatures, so that an improved chemical anchoring performance may be achieved.

It is preferred that the hardener bears, as the at least one functional group, at least a thiol group or an amino group, preferably an amino group. It is more preferred that the hardener is a diamine, and is even more preferably m-xylylene diamine (sometimes also referred to as m-xylene diamine; IUPAC: [3-(Aminomethyl)phenyl]methanamine). A thiol group or an amino group as the at least one functional group of the hardener can lead to a quick and efficient hardening reaction between component (A) and component (B). An amino group as the at least one functional group of the hardener can lead to a further improvement of the thermal and mechanical resistance of the resulting mortar, i.e. to an improved chemical anchoring performance.

Further amines which can be employed are amines which have reactive groups towards epoxy groups, for example: 1,2-diaminoethane (ethylene diamine), 1,2-propanediamine, 1,3-propanediamine, 1,4-diaminobutane, 2,2-dimethyl-1,3-propandiamine (neopentanediamine), diethylaminopropylamine (DEAPA), 2-methyl-1,5-diaminopentane, 1,3-diaminopentane, 2,2,4- or 2,4,4-trimethyl-1,6-diaminohexane (TMD) and mixtures thereof, 1,2-bis(aminomethyl)cyclohexane, hexamethylendiamine (HMD), 1,2- and 1,4-diaminocyclohexane (1,2-DACH und 1,4-DACH), bis(4-amino-3-methylcyclohexyl)methane, diethylentriamine (DETA), 4-azaheptan-1,7-diamin, 1,11-diamino-3,6,9-trioxundecane, 1,8-diamino-3,6-dioxaoctane, 1,5-diamino-methyl-3-azapentane, 1,10-diamino-4,7-dioxadecane, bis(3-aminopropyl)amine, 1,13-diamino-4,7, 10-trioxatridecane, 4-aminomethyl-1,8-diaminooctane, 2-butyl-2-ethyl-1,5-diaminopentane, N,N-bis-(3-aminopropyl)methylamine, triethylenetetramine (TETA), tetraethylenepentamine (TEPA), pentaethylenehexamine (PEHA), 1,4-benzoldimethanamine (p-xylylendiamine, PXDA), 5-(aminomethyl)bicyclo[[2.2.1]hept-2-yl]methylamine (NBDA, norbornandiamine), dimethyldipropylentriamine, dimethylaminopropyl-aminopropylamine (DMAPAPA), 3-aminomethyl-3,5,5-trimethylcyclohexylamine (isophorondiamine (IPDA)), diaminodicyclohexylmethane (PACM), diethylmethylbenzoldiamine (DETDA), 4,4'-diaminodiphenylsulfone (Dapson), mixed polycyclic amines (MPCA) (for example Ancamine 2168), dimethyldiaminodicyclohexylmethane (Laromin C260), 2,2-bis(4-aminocyclohexyl)propane, (3(4),8(9)bis(aminomethyldicyclo[5.2.1.0^{2,6}]decane (isomeric mixture, tricyclic primary amines; TCD-diamine), N,N'-diaminopropyl-2-methyl-cyclohexane-1,3-diamine, N,N'-diaminopropyl-4-methyl-cyclohexane-1,3-diamine, N-(3-aminopropyl)cyclohexylamine, and 2-(2,2,6,6-tetramethylpiperidin-4-yl) propane-1,3-diamine.

The epoxide component (A) may comprise optionally at least one reactive diluent, for example monoglycidylether, such as o-kresylglycidylether, dodecylglycidylether or tetradecylglycidylether, and glycidylether having an epoxide functionality of at least 2, such as 1,4-butanedioldiglycidylether (BDDGE), cyclohexanedimethanoldiglycidylether und hexandioldiglycidylether, resorcinoldiglycidylether, neopentylglycoldiglycidylether, butadiendioxide, divinylbenzoldioxide, diglycidylether, vinylcyclohexenedioxide, diethylenglycoldiglycidylether, as well as tri- or higher glycidylether, such as glycerintriglycidylether, pentaerythrittetraglycidylether, trimethylolpropane-triglycidylether (TMPTGE) or trimethylolethanetriglycidylether (TMETGE), preferred is trimethylolethanetriglycidylether. Also, mixtures of two or more of these reactive diluents can be used.

It is preferred that the ratio of component (A) to component (B) is 2:1 to 1:2, more preferably 1.5:1 to 1:1.5, with a ratio of 1:1 being most preferred, wherein the ratio is based on the epoxy equivalent value of component (A) and the functional group equivalent value of component (B). The epoxy equivalent value of component (A) is sometimes also referred to as EEQ value. In case the functional group is a thiol group, the thiol equivalent value of component (B) is used for calculating the ratio. In case the functional group is an amino group, the amino equivalent value of component (B) is used for calculating the ratio. The amino equivalent value of component (B) is sometimes also referred to as AHEQ value. A respective ratio of component (A) to component (B) may lead to a complete reaction of component (A) with component (B) and may be used for controlling the thermal and mechanical properties of a respective reaction product.

It is particularly preferred that regarding component (A), the first epoxide is selected from N,N,N',N'-tetraglycidyl meta-xylene diamine and phloroglucinol tris epoxy, and the second epoxide is limonene dioxide, and that regarding component (B), the hardener is m-xylylene diamine. With such a system, it can be possible to simultaneously achieve an improved chemical anchoring performance, a reduction of estrogenic components and an increase of bio-based components for the inventive mortar system.

It is preferred that the inventive mortar system comprises a mineral filler. Such a mineral filler may by comprised by component (A) and/or component (B). It is more preferred that component (A) and component (B) both comprise a filler. It is particularly preferred that the filler is selected from silicon-based minerals, more preferably silica, in particular fumed silica. It is thus most preferred that component (A) and component (B) both comprise a fumed silica as a filler. A filler can respectively be present in component (A), in component (B), and in the inventive mortar system, in an amount of e.g. 5 to 80 wt.%, preferably 10 to 70 wt.%, more preferably 15 to 60 wt.%, based on the total weight of component (A), component (B), and the inventive mortar system, respectively.

It is preferred that the inventive mortar system comprises further additives, in particular solvents, promoters, thickeners, and accelerators. As preferred promotors, silanes can be mentioned, in particular (3-glycidyloxypropyl)trimethoxysilane. As preferred thickeners, minerals can be mentioned, in particular fumed silica. As preferred accelerators, calcium solutions can be mentioned, in particular Ca(NO₃)₂ in glycerine.

However, other accelerators may be present, in particular in component (B), such as triflates nitrates and iodides. Further known accelerators are novolacs (including bisphenol), styrolised phenol, p-toluenesulfonic acid and salicyclic acid. These accelerators can be combined, for example novolac with an inorganic salt. As co-accelerator, the component (B) may comprise 2,4,6-tris(dimethylaminomethyl)phenol (for example Ancamine K54, Air Products, NL) or benzyl alcohol.

Subject of the invention is also a cured system comprising a mortar as described above. In such a cured system, the mixture of component (A) and component (B) is hardened, and the reaction between component (A) and component (B) is preferably complete.

Subject of the invention is also a process for preparing a mortar from an inventive mortar system as described herein, which process comprises the steps:
- separately providing component (A) and component (B), and
- thereafter mixing component (A) and component (B).

Subject of the invention is also a use of an inventive mortar system as described herein for chemical anchoring, in particular for chemically anchoring an element in concrete.

Both, the inventive process and the inventive use, profit from the advantages of the inventive mortar system. Particularly pronounced is the effect of an improved chemical anchoring performance. At the same time, the content of estrogenic components can be reduced, whereas the content of bio-based components can be increased.

### Brief description of the drawings

Aspects of the invention are shown in the figures. In particular:
Fig. 1 depicts structures of bifunctional epoxides referred to herein.
Fig. 2 depicts structures of polyfunctional epoxides referred to herein.
Fig. 3 shows glass transition temperatures (Tg2) of the examples summarized in Table 1.
Fig. 4 shows the results of a pull-out test determined according to the present invention.
Fig. 5 shows a correlation between glass transition temperatures (Tg2), and B3 values as obtained in a pull-out test, all determined according to the present invention.

### Materials and methods

In the present invention, in particular the following chemicals have been used:

| **Origin** | **Abbreviation** | **Name** | **CAS Number** | **Brand Name** | **Supplier** |
|---|---|---|---|---|---|
| Fuel-based | DGEBA | Bisphenol-A-diglycidylether | 25068-38-6 | Araldite@ GY 240 | Hunstman Advanced Materials, Germany |
| Fuel-based | DGEBF | Bisphenol-F-diglycidylether | 9003-36-05 | Araldite@ GY 282 | Hunstman Advanced Materials, Germany |
| Fuel-based | BDDGE | 1,4-butanediol diglycidylether | 2425-79-8 | Araldite@ DY 026 | Hunstman Advanced Materials, Germany |
| Fuel-based | TMPTGE | Trimethylolpropane triglycidyl ether | 30499-70-8 | Araldite@ DY-T | Hunstman Advanced Materials, Germany |
| Fuel-based | Erisys@ GA240 | Tetraglycidyl meta-Xylenediamine (Fig. 2) | 63738-22-7 | Erisys@ GA 240 | CVC Thermoset Specialties, Germany |
| Fuel-based | Erisys@ GE 40 | Epoxydized pentaerytrol (see Fig. 2) | 30973-88-7 | | CVC Thermoset Specialties, Germany |
| Fuel-based | Erisys@ GE 60 | Epoxydized sorbitol (see Fig. 2) | 68412-01-1 | | CVC Thermoset Specialties, Germany |
| Bio-based | PTHE | Phloroglucinol Tris Epoxy (see Fig. 2) | 4223-14-7 | SP-9S-5-003 | Specific Polymers, France |
| Bio-based | LDO | Limonene Dioxide (see Fig. 1) | 96-08-2 | LDO | Nitrochemie, Germany |
| Fuel-based | Glymo | (3-glycidyloxy-propyl)-trimethoxysilane | 2530-83-8 | Dynasylan Glymo | Evonik Resource Efficiency, Germany |
| Mineral | Millisil W12 | Quartz flour, average grain size d₅₀ = 16 µm | 238-878-4 | Millisil W12 | Quarzwerke, Germany |
| Mineral | CabOSil TS 720 | Fumed silica | 67762-90-7 | CabOSil TS 720 | Cabot corporation, Germany |
| Fuel-based | mXDA | m-Xylylene diamine | 1477-55-0 | mXDA | MGC, Japan |
| Salt | Ca(NO₃)₂ | Calcium Nitrate Tetrahydrate | 13477-34-4 | Calcium Nitrate Tetrahydrate | Sigma Aldrich, Germany |
| Fuel-based | Glycerine | 1,2,3-propanetriol | 56-81-5 | Glycerin | Merck, Germany |

In the present invention, the following analytical methods have been used:

### Differential Scanning Calorimetry (DSC)

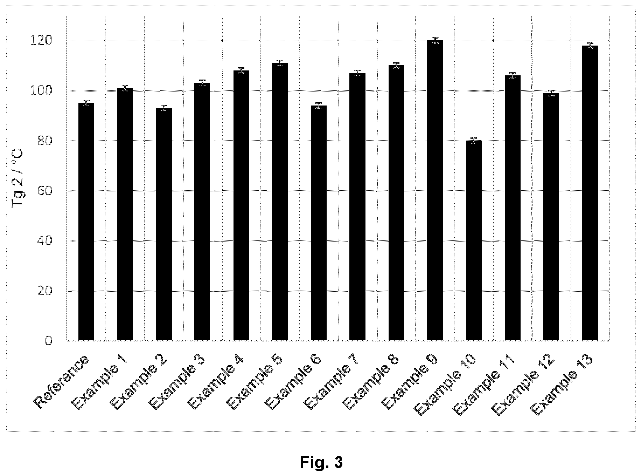

To determine the glass transition temperature Tg2, components A and B were mixed with a one to one stoichiometry, based on their EEQ and AHEQ values. The samples prepared by mixing were cured for 24 hours at 21 °C in a silicone form (thickness 1 mm). A small piece of the sample was weighed in an aluminium pan. Thereafter, the pan was inserted into a calorimeter (DSC) at room temperature and was then cooled down to -50°C. The measurement was then started with a heating rate of 10°K/min, heating up to 250°C. After reaching 250°C, the DSC was cooled down to -50°C again, and was thereafter heated in a second heating run up to 200°C. Tg2 is determined as the glass transition temperature of the second heating run to 200°C. The results are shown in Fig. 3.

### Pull-Out Test

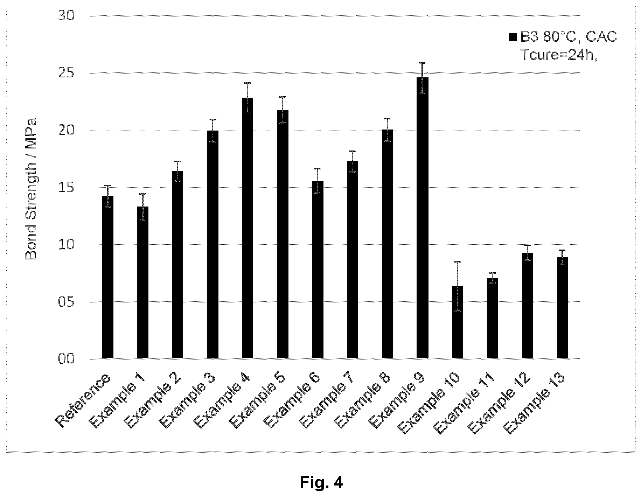

To determine the bond strength in concrete, pull-out experiments under the R1 and B3 (80°C) conditions were made following the description given by the guideline ETAG 001 part 5 (Guideline For European Technical Approval Of Metal Anchors For Use In Concrete), superseded by EAD 330499-00-0601. In these experiments, threaded rods (size M12) were installed in 14 mm cleaned (2x compressed air 6 bar, 2x brushed and 2x compressed air 6 bar) hammered drilled boreholes made in concrete plates (C20/25) with 60 mm embedment depth. After 24 h curing time at room temperature, the bond strength was determined in R1 pull-out tests. For the B3 (80°C) experiments, after 24 h curing time, the concrete blocks were put in an oven at 80°C for 48 h, and the pull-out was performed after this time at 80°C. The results are shown in Fig. 4.

### Examples

### Component A (Resin) of Reference and Examples 1-13

In a plastic bucket, the liquid epoxy resins were mixed with a wooden spatula. Then, filler and thickener were added and premixed by hand, before mixing it further into a dissolver (PC Labortsystem, volume 1L) during 8.5 minutes under 80 mbar reduced pressure at 3500 rpm.

### Component B (Hardener) of Reference and Examples 1-13

Calcium nitrate was used as an 80% solution in glycerine. For that, 400 g of Ca(NO₃)₂ tetrahydrate were added to 100 g of glycerine and stirred at 50°C until complete dissolution (ca. 3 hours).

In a plastic bucket, the specified amount of the calcium nitrate solution in glycerine was added to the amine (mXDA). Then, the filler and thickener were added and premixed by hand, before mixing it further into a dissolver (PC Labortsystem, volume 1L) during 8.5 minutes under 80 mbar reduced pressure at 3500 rpm.

### Mixing of mortar systems into mortars

An epoxy mortar is generally composed of a "resin", or component (A), and a "hardener", or component (B). In the examples, both parts were mixtures of several chemical compounds. A reference formulation was prepared and the petroleum-based DGEBA and BDDGE epoxy resin components were exchanged by other same or higher functionality and/or bio-based epoxy resins to prepare inventive examples.

In particular, components A and B were mixed with a stoichiometry one to one based on their epoxy equivalent value (EEQ) and their amine equivalent value (AHEQ) using a speedmixer. The following Table 1 lists the mortar systems and mortars prepared in the examples.

As seen from Table 1, a reference formulation was formed by a component (A) that contained two base resins (DGEBA and DGEBF) and two reactive diluents (BDDGE and TMPTGE) together with an adhesion promoter (Glymo), filler (Millisil W12) and a thickener (CabOSil TS 720). The component (B) is composed of an amine (mXDA), an accelerator (solution of 80% Ca(NO₃)₂ in glycerine), a filler (Millisil W12) and a thickener (CabOSil TS 720). Varying the respective components as outlined in Table 1 yielded inventive Examples 1 to 13 (amounts given in parts by weight).

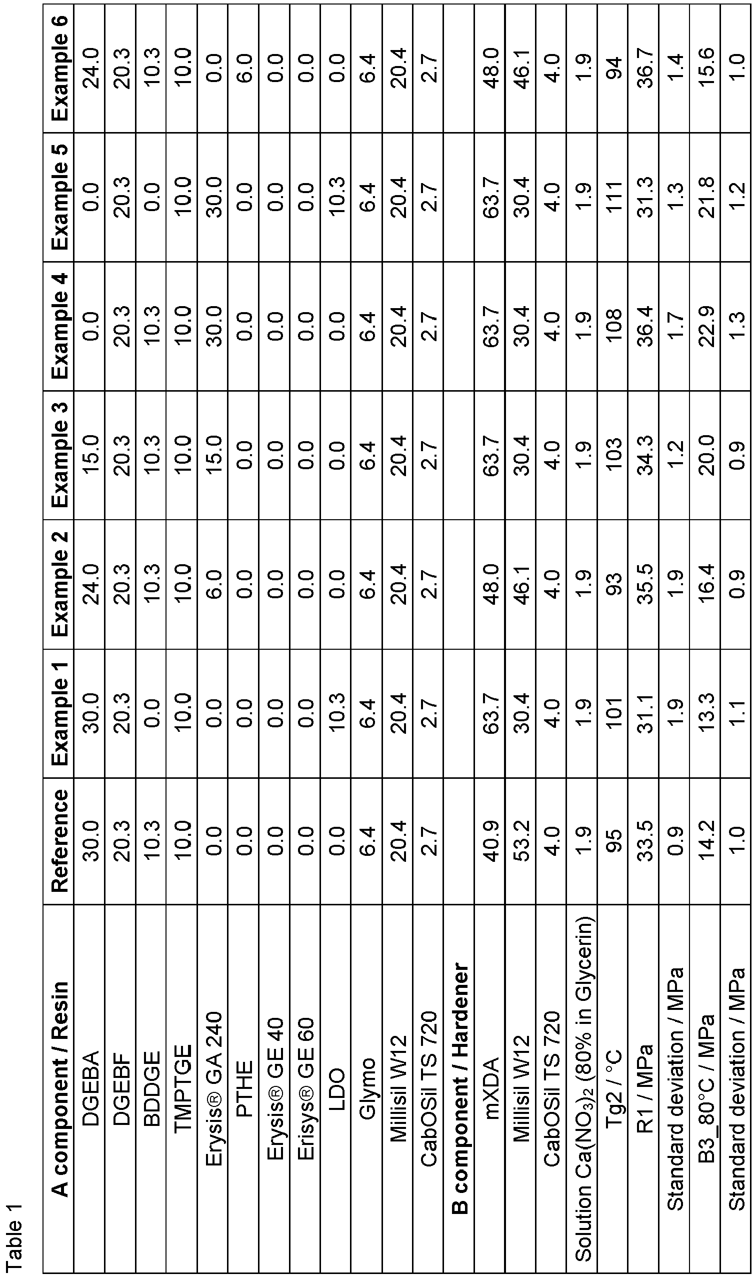

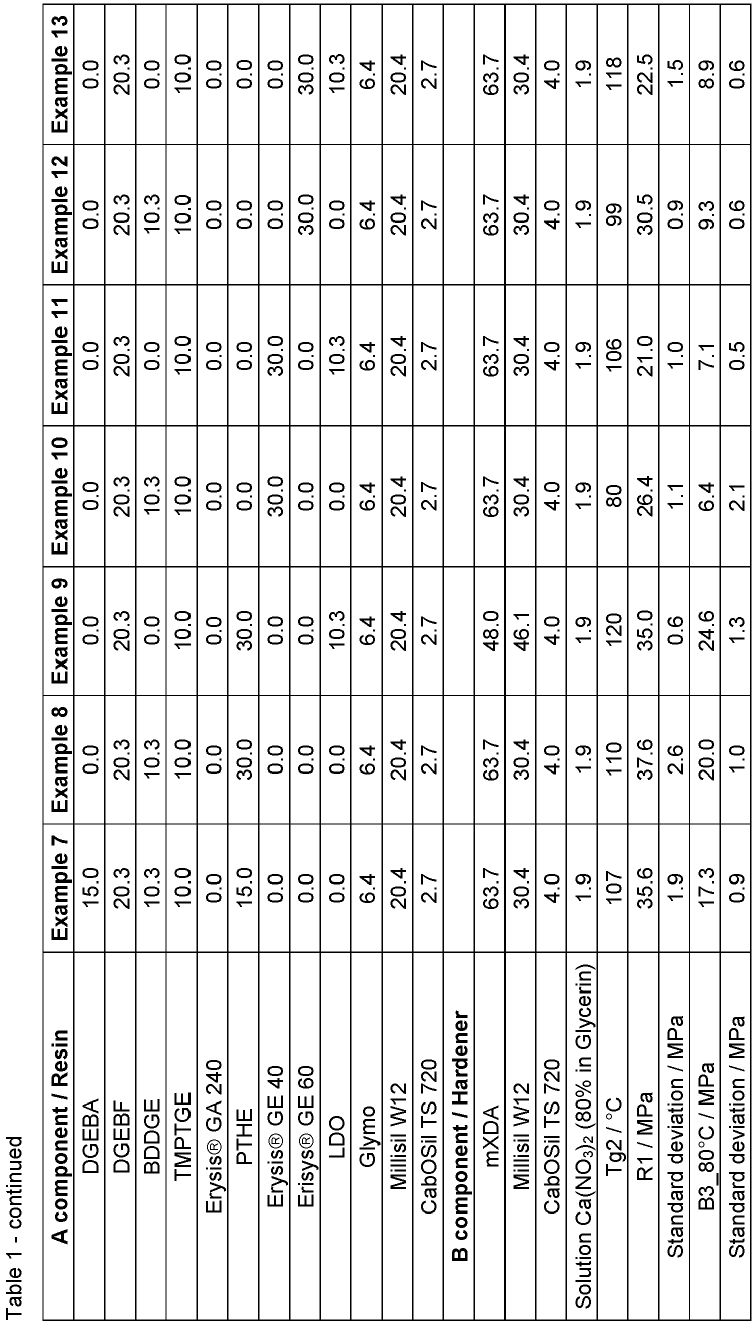

### Discussion of the experimental results

A performance advantage of polyfunctional epoxides was identified in high temperature applications compared to some petrochemical counter-pairs. In particular, higher Tg2 and pull-out values at 80°C were achieved for formulations in which bifunctional epoxy components like DGEBA were substituted by epoxy resins with three or more epoxy groups like Erysis^{®} GA 240 (petroleum-based) and PTHE (bio-based epoxy). This effect was seen by the Tg2 but not necessarily during pull-out for polyfunctionalized epoxy resins with aliphatic backbone like Erisys@ GE 40 and GE 60, whereas polyfunctional aromatic epoxides exhibited particularly high Tg2 and pull-out values. Additionally, the combination of PHTE with the bio-based reactive diluent LDO led to the highest Tg2 and pull-out values at 80°C.

Accordingly, the experiments showed that using some bio-based epoxides like PTHE and LDO compared to their petrochemical counter-pairs (DGEBA and BDDGE) increases the Tg2 of the mortars. Additionally, these formulations were tested in the test field leading to analogous results which means that the use of PTHE and LDO led to an increased bond strength of the corresponding formulations pulled at 80°C.

Surprisingly, it was found that the complete replacement of BDDGE by the bio-based epoxy LDO in the reference formulation (see Reference in Table 1) led to an increase in Tg2 (Example 1 in Table 1). This effect was also found for Example 5 compared to Example 4, for Example 9 compared to Example 8, for Example 10 compared to Example 11, and for Example 13 compared to Example 12.

Additionally, it was found that the replacement of the difunctional epoxy resin DGEBA by tetrafunctional epoxy resins like Erisys@ GA 240 and the bio-based PTHE, led to an increase of the Tg2 (Examples 2, 3, 4 for Erisys@ GA240 and 6, 7 and 8 for PHTE in Table 1), with a higher Tg2 in the case of the bio-based PTHE. Furthermore, the substitution of DGEBA and BDDGE by the bio-based PTHE and LDO respectively (Example 9 of Table 1) led to the formulation with the highest Tg2, suggesting that the effect is at least cumulative and likely synergistic.

Further, aliphatic polyfunctional epoxy resins (Erisys^{®} GE40 and 60) were also tested. In these cases, somewhat lower bond strength (R1 and B3) values were obtained, indicating that an aromatic backbone is advantageous for higher mechanical properties.

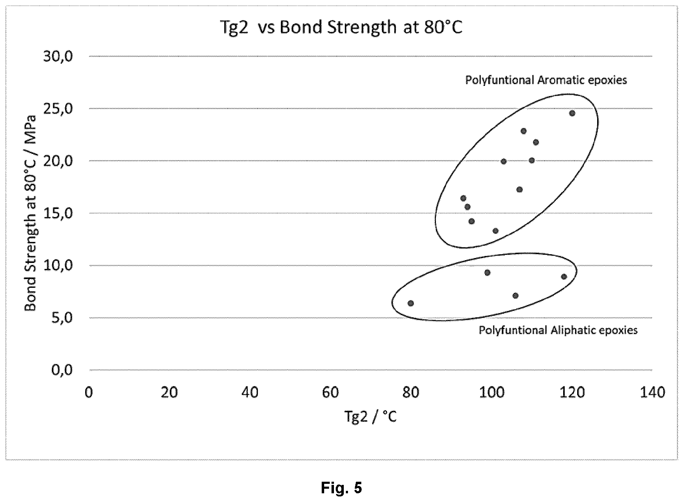

The corresponding mortars were also tested in R1 and B3 (80°C) pull out tests. The inventive examples showed same or higher R1 values than the reference considering the scattering, as indicated by the standard deviation. In addition, the examples showing higher Tg2 regularly gave also better results than the reference formulation at 80°C. Indeed, a correlation between the Tg2 and the B3_80°C values could be observed in the graph presented in Fig. 5.

## Claims

1. Mortar system, comprising:
a component (A) comprising
(i) a first epoxide bearing three or more epoxy groups, and
(ii) a second epoxide bearing two epoxy groups or more that two epoxy groups, wherein the second epoxide comprises a linear, aliphatic or cyclic group and is different from the first epoxide,
and
a component (B) comprising a hardener bearing at least one functional group capable of reacting with an epoxy group.

2. Mortar system according to claim 1, wherein the first epoxide bears more than three epoxy groups.

3. The mortar system according to claim 2, wherein the second epoxide comprises an aliphatic cyclic group.

4. The mortar system according to claim 1 or 2, wherein the second epoxide is limonene dioxide.

5. The mortar system according to at least one of the preceding claims, wherein the first epoxide is an aromatic epoxide.

6. The mortar system according to claim 5, wherein the first epoxide is selected from N,N,N',N'-tetraglycidyl meta-xylene diamine and phloroglucinol tris epoxy.

7. The mortar system according to at least one of the preceding claims, wherein the first epoxide and/or the second epoxide are bio-based, preferably wherein the first epoxide and the second epoxide are bio-based.

8. The mortar system according to at least one of the preceding claims, wherein the hardener bears, as said at least one functional group, at least a thiol group or an amino group, preferably an amino group.

9. The mortar system according to claim 8, wherein the hardener is a diamine, preferably m-xylylene diamine.

10. The mortar system according to at least one of the preceding claims, which comprises a mineral filler.

11. The mortar system according to at least one of the preceding claims, wherein
in component (A)
(i) said first epoxide is selected from N,N,N',N'-tetraglycidyl meta-xylene diamine and phloroglucinol tris epoxy, and
(ii) said second epoxide is limonene dioxide, and
in component (B) said hardener is m-xylylene diamine.

12. A mortar comprising a physical mixture of component (A) and component (B) of a mortar system according to at least one of the preceding claims.

13. A cured system comprising a mortar according to claim 12.

14. Process for preparing a mortar from a mortar system according to at least one of claims 1 to 13, comprising the steps:
- separately providing component (A) and component (B), and
- thereafter mixing component (A) and component (B).

15. Use of a mortar system according to at least one of claims 1 to 11 for chemical anchoring, in particular for chemically anchoring an element in concrete.
